# EUROPÄISCHE PATENTANMELDUNG

(11) **EP 1 258 282 A2**
(43) Veröffentlichungstag der Anmeldung: **20.11.2002**
(21) Anmeldenummer: 02009708.5
(22) Anmeldetag: 30.04.2002
(51) Int. Cl.: B01D 63/08

(54) **Verteilerplatte für Querstrom Kassettentyp-Filtrationseinrichtungen**

(30) Priorität: 15.05.2001 US 855788
(71) Anmelder: SARTORIUS AG, 37075 Göttingen (DE)
(72) Erfinder: Kuss, Knut, 34212 Melsungen (DE); Ajam, Mohammad Saeed, Dr., 44227 Dortmund (DE); Pischke, Karl-Heinz, 37077 Göttingen (DE)

(57) **Zusammenfassung**

Es wird eine monodirektionale oder bi-direktionale (Ein-Richtungs- oder Zwei-Richtungs)-Verteilerplatte für Querstrom Kassettentyp-Filtrationseinrichtungen zur Verfügung gestellt, welche drei Teile umfaßt und in der Ultrafiltration oder Mikrofiltration von Flüssigkeiten verwendet wird. Die dreiteilige Verteilerplattenanordnung umfaßt ein mittleres Plattenelement bzw. -glied, ein oberes Plattenelement und eine unteres Plattenelement, welche, wenn sie kombiniert sind, eine vordere und rückwärtige Oberfläche, eine erste und zweite Seitenwand und eine erste und zweite Rand- bzw. Eckwand aufweisen. Die vordere und rückwärtige Oberfläche der Verteilerplattenanordnung sind mit Zufuhr-, Rückstands- und Filtratöffnungen bzw. -löchern versehen, die angeordnet sind, um mit Zufuhr-, Rückstands- und Filtratöffnungen einer Mehrzahl von Filterkassetten wechselzuwirken. Aufgrund der Art des Flusses zu und/oder von zugehörigen Filterkassetten mittels der dreiteiligen Verteilerplattenanordnung kann ein gleicher Druck an allen Löchern erreicht werden, um einen gleichen bzw. gleichmäßigen Fluß über eine Filtermembranoberfläche sicherzustellen, wodurch eine Filtrationsleistung erhöht wird. Die dreiteilige Konstruktion der Verteilerplatte erlaubt eine einfache Anpaßbarkeit an verschiedene Einrichtungen bzw. Installationen.

## Beschreibung

1. Gebiet der Erfindung. Die vorliegende Erfindung bezieht sich auf eine Verteilervorrichtung für eine Mehrzahl von Flüssigkeitsfiltrationssegmenten, worin eine Filtration durch einen tangentialen Fluß der Flüssigkeit über eine Filteroberfläche durchgeführt wird, und genauer auf eine Verteilerplatte für Querstrom Kassettentyp-Filtrationseinrichtungen, welche es ermöglicht, eine Mehrzahl von Filtrationsmodulen zu stapeln, worin Flüssigkeit eingebracht und von dem Filtrationsmodul unter Bedingungen abgezogen wird, um eine verbesserte Trennung von Filtratspezies bzw. -arten von zurückgehaltenen Spezies bzw. Arten zu erreichen.

2. Beschreibung des Standes der Technik. Querstrom Kassettentyp-Filtrationseinrichtungen bestehen üblicher Weise gemäß dem Stand der Technik aus einem Halter, Filterkassetten und Endplatten. Der Halter bzw. die Haltevorrichtung nimmt die Endplatten und wenigstens eine Filterkassette auf, welche dicht zwischen die Endplatten gedrückt ist. Für diesen Zweck sind die Endplatten an dem Halter so angeordnet, um über- bzw. gegeneinander bewegbar zu sein. Wenigstens eine Endplatte ist als eine Verteilerplatte konstruiert mit Verbindungen für die Zufuhr von zu filtrierender Flüssigkeit in die Filterkassetten, und für den Austrag von Konzentrat und Filtrat aus den Filterkassetten. Wenn die Zufuhr und/oder der Austrag der Fluide hauptsächlich an einer Oberfläche der Verteilerplatte stattfindet, wird die Platte als eine monodirektionale bzw. Ein-Richtungs-Verteilerplatte bezeichnet, und wenn die Zufuhr und/oder der Austrag der Fluide an der vorderen und rückwärtigen Oberfläche der Verteilerplatte stattfindet, wird sie als eine bidirektionale bzw. Zwei-Richtungs-Verteilerplatte bezeichnet. In dem letzteren Fall sind die Filterkassetten an beiden Enden an der vorderen und rückwärtigen Oberfläche der Verteilerplatte angeordnet.

In der DE-OS 34 41 249 ist eine Querstrom Kassetten-Filtrationseinrichtung beschrieben, in welcher die Filterkassetten zwischen zwei Endplatten, die jeweils als Verteilerplatten konstruiert sind, geklemmt sind. Es ist nachteilig, daß die Verbindungen an den zwei Verteilerplatten nicht feststehend mit Leitungen versehen sein bzw. ausgeschlossen werden können, da die Verteilerplatten für das Klemmen der Filterkassetten an ihren Platz gegeneinander bzw. aneinander bewegt werden müssen. Eine feststehende Leitung bzw. Verrohrung würde jedoch die Filtrationszuverlässigkeit zusammen mit der Fähigkeit der Vorrichtung sterilisiert zu werden, signifikant erhöhen, was insbesondere in empfindlichen Bereichen einer Filtration, beispielsweise dem pharmazeutischen oder biotechnologischen Gebiet wichtig ist.

US-Patent Nr. 4,715,955 beschreibt eine Querstrom Kassetten-Filtrationseinrichtung bestehend aus einem Halter, einer Filterkassette und Endplatten, worin eine der Endplatten als eine monodirektionale Verteilerplatte konstruiert ist, an welcher alle Verbindungen für die Zufuhr und den Austrag der Fluids angeordnet sind. Eine Ausbildung dieser Verteilerplatte als eine bidirektionale Verteilerplatte ist in der EP 0 345 209 B1 oder ihrem äquivalenten US-Patent Nr. 4,849,102 diskutiert. In beiden Fällen weisen die Verteilerplatten gegenüberliegende, ebene bzw. planare, vordere und rückwärtige Oberflächen, gegenüberliegende, schmale, erste und zweite Seitenwände, gegenüberliegende, schmale, erste und zweite Kanten- bzw. Eckwände auf, eine entsprechende Verbindung für die Zufuhr von Flüssigkeit, die zu filtrieren ist, und für den Austrag des Konzentrats und zwei Verbindungen für den Austrag von Filtrat auf. Die vordere Oberfläche oder die vordere und rückwärtige Oberfläche weisen voneinander beabstandete Öffnungen auf, welche mit entsprechenden Öffnungen der Filterkassetten, die an der Verteilerplatte festzulegen sind, übereinstimmen. Die Öffnungen für die Zufuhr von zu filtrierender Flüssigkeit und eine erste Anzahl von Öffnungen für den Austrag von Filtrat liegen auf einer geraden Linie parallel zu der ersten schmalen Kanten- bzw. Eckwand und die Öffnungen für den Austrag von Konzentrat und eine zweite Anzahl von Öffnungen für den Austrag von Filtrat liegen auf einer geraden Linie parallel zu der zweiten schmalen Rand- bzw. Kantenwand. Die erste Anzahl von Öffnungen für den Austrag von Filtrat öffnet bzw. mündet in einem spitzen Winkel in bezug auf die vordere Oberfläche oder die vordere und rückwärtige Oberfläche in einen ersten Kanal, welcher sich parallel zu der ersten schmalen Kantenwand und zu der vorderen und rückwärtigen Oberfläche erstreckt. Er tritt aus der Verteilerplatte an wenigstens einer der Seitenwände aus. Die zweite Anzahl von Öffnungen für den Austrag von Filtrat öffnet bzw. mündet in einem spitzen Winkel in bezug auf die vordere Oberfläche oder die vordere und rückwärtige Oberfläche in einen zweiten Kanal, welcher sich parallel zu der zweiten schmalen Kantenwand und zu der vorderen und rückwärtigen Oberfläche erstreckt. Er tritt aus der Verteilerplatte an wenigstens einer der Seitenwände aus.

Es ist nachteilig, daß die Verbindung für die Zufuhr von zu filtrierender Flüssigkeit und die Verbindung für den Austrag von Konzentrat jeweils an dem Ende des ersten Kanals bzw. dem Ende des zweiten Kanals von einer der Seitenwände ausgebildet sind. Diese Konfiguration führt zu einem ungewünschten Druckabfall in der Richtung des Endes, welches der Verbindung gegenüberliegt, welcher sich über die Membranoberflächen fortsetzt. Dieser Druckgradient führt zu einem nicht gleichmäßigen Fließen bzw. Strömen über und durch die Membranoberflächen und so zu einer nicht gleichmäßigen Verwendung der Membranoberflächen der Filterkassette, was als eine Folge eine Reduktion in der Filtrationsleistung und ein frühzeitiges Blockieren der Membranen in den stärker belasteten Regionen aufweist.

Es besteht daher ein Erfordernis für eine Verteilerplatte für Kassetten-Filtrationseinrichtungen, welche eine verbesserte Filtrationsleistung und eine längere Einsatzlebensdauer der Kassetten-Filtrationsvorrichtung ermöglichen können.

Zusätzlich sind die Verteilerplatten gemäß dem Stand der Technik aus einer Einheitskonstruktion mit Standardrohrleitungsverbindungsstücken ausgebildet. Jedoch gibt es auf der Welt unterschiedliche Rohrleitungsstandards, welche alle im Hinblick auf den Durchmesser und die Wanddicke differieren. Beispielsweise kann eine Leitung einer Nominalweite DN25 den folgenden Innendurchmesser aufweisen: ISO-Standard - 30,5 mm; DIN-Standard 11851 - 25 mm; SMS-Standard - 22,5 mm; und BSOD-Standard (Inch) - 22,1 mm. Da die Halter von Filtrationseinrichtungen üblicherweise in bestehende Umgebungen integriert werden, muß der Rohrleitungsstandard, welcher üblicherweise durch einen Benutzer angewandt wird, verwendet werden. Weiterhin ist es für das Design einer Gesamtinstallation, die mit guter Herstellungspraxis übereinstimmen soll, absolut zwingend, einen Übergang sicherzustellen, welcher in keiner Weise falsch angepaßt bzw. angeschlossen werden kann.

Typische Filtrationsvorrichtungen wenden Verbindungen bzw. Anschlüsse an, welche nur einem Standard entsprechen, und müssen entsprechend in jeder gegebenen Installation reduziert werden. Ein Adaptieren der Halterungen und/oder der Verteilerplatten ist nur möglich mit einer bemerkenswerten strukturellen Änderung aufgrund der versetzten Bohrungen von verschiedenen Herstellern, da es üblicherweise notwendig ist, den Winkel der Bohrungen zu verändern.

Daher besteht ein weiteres Erfordernis für eine Verteilerplatte für Kassetten-Filtrationsvorrichtungen, welche leicht für variierende Rohrleitungsstandards und für variierende Installationskonfigurationen adaptierbar ist.

### ZUSAMMENFASSUNG DER ERFINDUNG

In Übereinstimmung mit der vorliegenden Erfindung wird eine Verteilerplattenanordnung bzw. -baueinheit für Querstrom Kassetten-Filtrationseinrichtungen zur Verfügung gestellt, welche aus drei Teilen besteht und in der Ultrafiltration oder Mikrofiltration von Flüssigkeiten verwendet wird. Die dreiteilige Verteilerplattenanordnung umfaßt ein mittleres Plattenelement bzw. -glied, ein oberes Plattenelement und ein unteres Plattenelement, welche, wenn sie in der Verwendung kombiniert werden, eine vordere Oberfläche und eine rückwärtige Oberfläche, eine erste und zweite Seitenwand und eine erste und zweite Rand- bzw. Eckwand aufweisen.

Das mittlere Plattenelement erhält bzw. nimmt eine Zufuhrleitung und eine Rückstandsleitung auf, welche parallel zu den Kanten- bzw. Eckwänden und zu der vorderen Oberfläche und der rückwärtigen Oberfläche laufen und an wenigstens einer der Seitenwände austreten bzw. hervortreten. Die Zufuhrleitung ist über Zufuhrverbindungsleitungen mit Zufuhröffnungen bzw. -löchern an der vorderen Oberfläche und/oder rückwärtigen Oberfläche der mittleren Platte verbunden. Die Zufuhröffnungen sind kongruent mit entsprechenden Zufuhröffnungen eines Filtrationsmoduls angeordnet. Die Rückstandsleitung ist über Rückstandsverbindungsleitungen an Rückstandsöffnungen an der vorderen Oberfläche und/oder der rückwärtigen Oberfläche der mittleren Platte angeschlossen. Die Rückstandsöffnungen sind kongruent bzw. deckungsgleich mit entsprechenden Rückstandsöffnungen eines Filtrationsmoduls angeordnet.

Weiterhin umfaßt das mittlere Plattenelement an seiner vorderen und/oder rückwärtigen Oberfläche obere und untere Filtratöffnungen, welche kongruent bzw. deckungsgleich mit entsprechenden Filtratöffnungen des Filtrationsmoduls angeordnet sind. Die oberen Filtratöffnungen sind in einer kommunizierenden Weise mit einer oberen Filtratsammelkammer über obere Filtratverbindungsleitungen verbunden. In der ersten Ausbildung der dreiteiligen Verteilerplatte ist die Filtratsammelkammer als eine Vertiefung in der ersten Rand- bzw. Eckwand des mittleren Plattenelements ausgebildet. In der zweiten Ausbildung ist die Filtratsammelkammer als eine Vertiefung in der Rand- bzw. Eckwand des oberen Plattenelements ausgebildet, welche zu der ersten Seitenwand des mittleren Plattenelements schaut bzw. gerichtet ist. Die unteren Filtratöffnungen sind in einer kommunizierenden Weise mit einer unteren Filtratsammelkammer über untere Filtratsammelleitungen in ähnlicher Weise wie für die oberen Filtratöffnungen verbunden.

Die verschiedenen Ausbildungen der dreiteiligen Verteilerplattenanordnung der gegenständlichen Erfindung variieren durch die Konfiguration der oberen und unteren Plattenelemente, welche es der Verteilerplattenanordnung erlauben, daß sie an unterschiedliche Installationen angepaßt wird, ohne die Verteilerplatte neu zu konstruieren bzw. auszubilden. In der ersten Ausbildung nimmt das obere Plattenelement eine Filtratleitung auf, welche parallel zu den Kanten- bzw. Eckwänden und zu der vorderen und rückwärtigen Oberfläche verläuft und von wenigstens einer der Seitenwände austritt. Die Filtratleitung ist in einer kommunizierenden Weise an die obere Filtratsammelkammer des mittleren Plattenelementes über eine oder mehrere längsverlaufende Filtratleitungsöffnungen angeschlossen. Analog zu dem oberen Plattenelement nimmt das untere Plattenelement eine Filtratleitung auf, welche parallel zu den Kanten- bzw. Eckwänden und zu der vorderen und rückwärtigen Oberfläche verläuft und von wenigstens einer der Seitenwände ausgeht bzw. austritt. Die Filtratleitung ist in einer kommunizierenden Weise mit der unteren Filtratsammelkammer des mittleren Plattenelements über eine oder mehrere längsverlaufende Filtratleitungsöffnungen verbunden.

In der zweiten Ausbildung nimmt das obere Plattenelement eine kurze Filtratleitung auf, welche senkrecht zu den Kantenwänden und in rechten Winkeln zu der vorderen und rückwärtigen Oberfläche verläuft und von der Kantenwand des oberen Plattenelements austritt. Die Filtratleitung ist in einer wechselwirkenden bzw. kommunizierenden Weise direkt mit der oberen Filtratsammelkammer des oberen Plattenelements verbunden. In analoger Weise zu dem oberen Plattenelement erhält das untere Plattenelement eine Filtratleitung, welche senkrecht zu den Kantenwänden und unter rechten Winkeln zu der vorderen und rückwärtigen Oberfläche verläuft und von der Kantenwand des unteren Plattenelements ausgeht. Die Filtratleitung ist in einer kommunizierenden Weise direkt mit der unteren Filtratsammelkammer des unteren Plattenelementes verbunden.

Schließlich sind in jeder Ausbildung die oberen und unteren Plattenelemente an dem mittleren Plattenelement über Verbindungen, beispielsweise Schrauben, die einem Fachmann geläufig sind, festgelegt. Zusätzlich ist eine fluiddichte Abdichtung in dem Umfangskantenbereich der Filtratsammelkammern beispielsweise mittels einer O-Ringdichtung implementiert.

Aufgrund der Art des Flusses bzw. der Strömung zu und/oder von zusammengesetzten bzw. zugeordneten Filterkassetten oder Modulen mittels einer Verteilerplattenanordnung, welche die Erfindung verkörpert, kann es möglich sein, ungefähr denselben Druck in allen Kanälen der Filterkassetten zu erreichen, welche mit diesen Öffnungen kommunizieren. So kann ein gleichmäßiges Fließen über die Membranoberflächen in bezug auf die Fläche und ein gleichmäßiges Fließen durch die Membranen in den Filterkassetten sichergestellt werden, was eine Erhöhung in der Filtrationsleistung um bis zu 15 % und eine etwa äquivalente Verlängerung der Einsatz- bzw. Lebensdauer einer Kassetten-Filtrationsvorrichtung, die mit einer derartigen Verteilerplattenanordnung versehen ist, ausbilden kann.

Weiterhin erlaubt die dreiteilige Konstruktion, daß die Verteilerplattenanordnung an verschiedene Installationen bzw. Einrichtungen adaptiert wird. Indem die Fähigkeit für eine Änderung des Durchmessers der Leitungen in dem Endplattenelement bzw. -glied besteht, bleiben die anderen Bohrungen der Platte unverändert und die Verteilerplattenanordnung muß nicht neu konstruiert werden. Zusätzlich kann das Verteilerplattenelement kundenspezifisch entsprechend der bestehenden Installation des Verwenders ohne externe Adaptoren ausgebildet werden, was in einem reduzierten Totvolumen und einem kompakteren Gesamtdesign resultiert.

Diese und andere Merkmale der vorliegenden Erfindung werden aus der folgenden detaillierten Beschreibung, die im Zusammenhang mit den beiliegenden Zeichnungen betrachtet ist, noch deutlicher werden. Es sollte jedoch verstanden werden, daß die Zeichnungen nur für den Zweck einer Illustration und nicht als eine Definition der Grenzen der Erfindung vorgesehen sind.

### KURZE BESCHREIBUNG DER ZEICHNUNGEN

Fig. 1a ist eine perspektivische Darstellung einer Verteilerplattenanordnung in Übereinstimmung mit der vorliegenden Erfindung.
Fig. 1b ist eine perspektivische Darstellung der Verteilerplattenanordnung, wie sie in Fig. 1a gezeigt ist, um 180° gedreht.
Fig. 2 ist eine Seitenaufrißansicht der Verteilerplattenanordnung von Fig. 1.
Fig. 3 ist eine Querschnittsansicht der Verteilerplattenanordnung entlang der Linie 3-3 in Fig. 2.
Fig. 4 ist eine perspektivische Explosionsdarstellung der Verteilerplattenanordnung, wie sie in Fig. 1 gezeigt ist.
Fig. 5 ist eine perspektivische Explosionsdarstellung der Verteilerplattenanordnung, wie sie in Fig. 1 gezeigt ist, wobei eine bestimmte Innenstruktur derselben strichliert gezeigt ist.
Fig. 6a ist eine perspektivische Darstellung einer Verteilerplattenanordnung in Übereinstimmung mit der vorliegenden Erfindung.
Fig. 6b ist eine perspektivische Darstellung der Verteilerplattenanordnung, wie sie in Fig. 6a gezeigt ist, um 180° gedreht.
Fig. 7 ist eine Querschnittsansicht des mittleren Plattenelements der Verteilerplattenanordnung, wie sie in Fig. 6a gezeigt ist, entlang der Linie 7-7.
Fig. 8 ist eine Draufsicht auf eine erste Seitenwand des mittleren Plattenelements der Verteilerplattenanordnung von Fig. 6b, wobei eine bestimmte Innenstruktur desselben strichliert gezeigt ist.
Fig. 9 ist eine diagrammartige, perspektivische Darstellung des mittleren Plattenelements der Verteilerplattenanordnung die in Fig. 6a gezeigt ist.
Fig. 10 ist eine Längsschnittansicht des mittleren Plattenelements der Verteilerplattenanordnung, wie sie in Fig. 9 gezeigt ist, entlang der Linie 10-10.
Fig. 11 ist eine Bodendraufsicht des oberen Plattenelements der Verteilerplattenanordnung, die in Fig. 6a gezeigt ist, wo die Bodenoberfläche des oberen Plattenelements auf der mittleren Platte aufruht.
Fig. 12 ist eine Querschnittsansicht des oberen Plattenelements von Fig. 11 entlang der Linie 12-12.
Fig. 13 ist eine Draufsicht auf das obere Plattenelement von Fig. 11.

### DETAILLIERTE BESCHREIBUNG DER BEVORZUGTEN AUSBILDUNGEN

Die Verteilerplattenanordnung für Querstrom Kassettentyp-Filtrationseinrichtungen der vorliegenden Anmeldung umfaßt drei Teile und wird in der Ultrafiltration oder Mikrofiltration von Flüssigkeiten verwendet. Die dreiteilige Verteilerplattenanordnung kann als eine monodirektionale Verteilerplatte verwendet werden, wo die Zufuhr und/oder der Austrag von Fluiden an nur einer Oberfläche der Platte stattfindet, oder als eine bidirektionale Verteilerplatte, wo die Zufuhr und/oder der Austrag von Fluiden an der vorderen und rückwärtigen Oberfläche der Platte stattfindet. Die unten beschriebenen Ausbildungen werden in bezug auf eine bidirektionale Verteilerplatte beschreiben, wo gleiche Bezugszeichen gleiche Elemente darstellen.

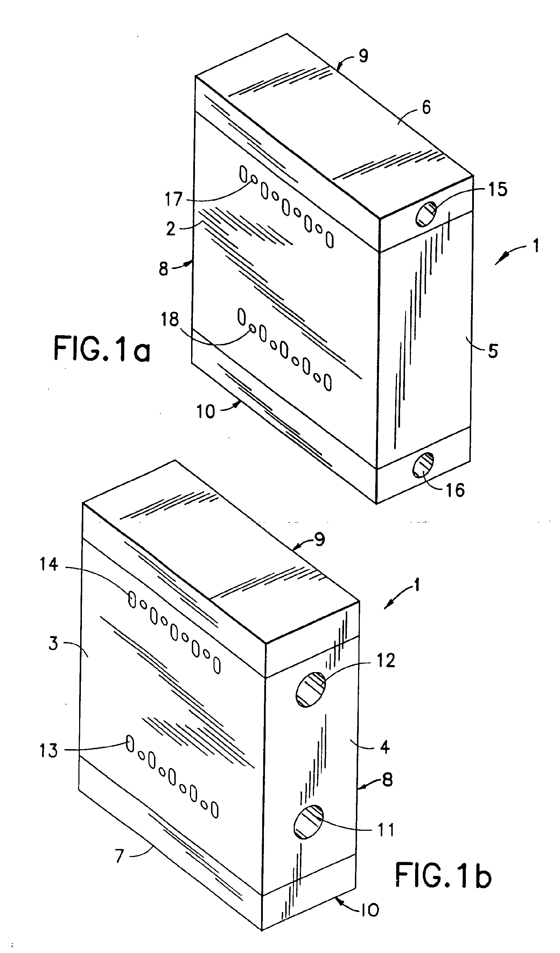

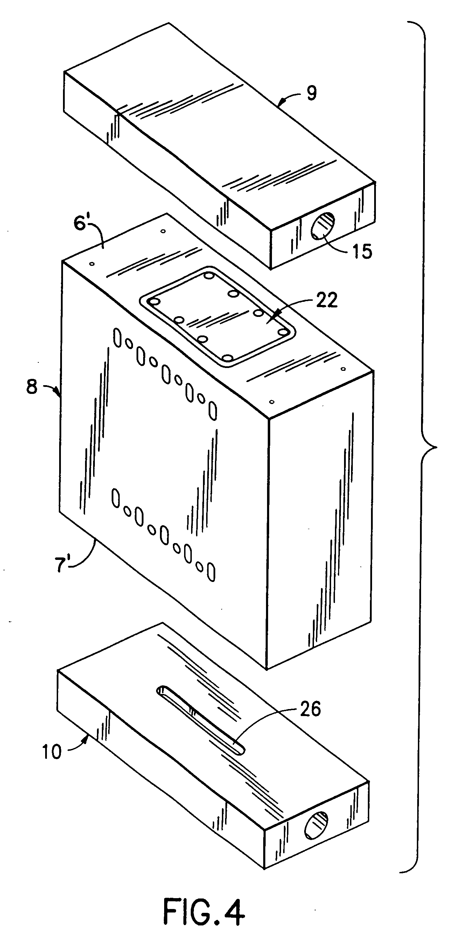

Bezugnehmend auf Fig. 1 bis 5 umfaßt die erste Ausbildung der dreiteiligen Verteilerplattenanordnung 1 ein mittleres Plattenelement bzw. -glied 8, eine oberes Plattenelement 9 und ein unteres Plattenelement 10 und weist eine vordere Oberfläche 2 und eine rückwärtige Oberfläche 3, eine erste 4 und eine zweite 5 Seitenwand und eine erste 6 und eine zweite 7 Kanten- bzw. Eckwand auf.

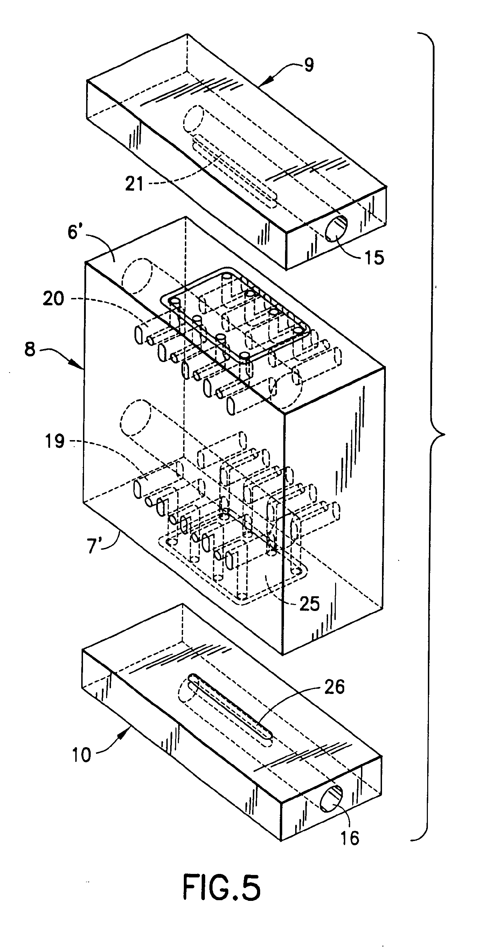

Das mittlere Plattenelement 8 erhält bzw. empfängt eine Zufuhrleitung 11 und eine Rückstandsleitung 12, welche parallel zu den Kantenwänden 6, 7 und zu der vorderen Oberflache 2 und der rückwärtigen Oberfläche 3 verlaufen und an zumindest einer der Seitenwände 4, wie dies in Fig. 1b gezeigt ist, austritt. Die Zufuhrleitung 11 ist über Zufuhrverbindungsleitungen 19 an Zufuhröffnungen 13 an der vorderen Oberfläche 2 und der rückwärtigen Oberfläche 3 des mittleren Plattenelements 8, wie dies in Fig. 5 gezeigt ist, angeschlossen. Die Zufuhröffnungen 13 sind kongruent bzw. deckungsgleich mit entsprechenden Zufuhröffnungen von Filtrationsmodulen (nicht dargestellt) angeordnet. Die Rückstandsleitung 12 ist über Rückstandsverbindungsleitungen 20 mit Rückstandsöffnungen 14 an der vorderen Oberfläche 2 und der rückwärtigen Oberfläche 3 des mittleren Plattenelements 8 (Fig. 5) verbunden. Die Rückstandsöffnungen 14 sind kongruent mit entsprechenden Rückstandsöffnungen der Filtrationsmodule (nicht dargestellt) angeordnet.

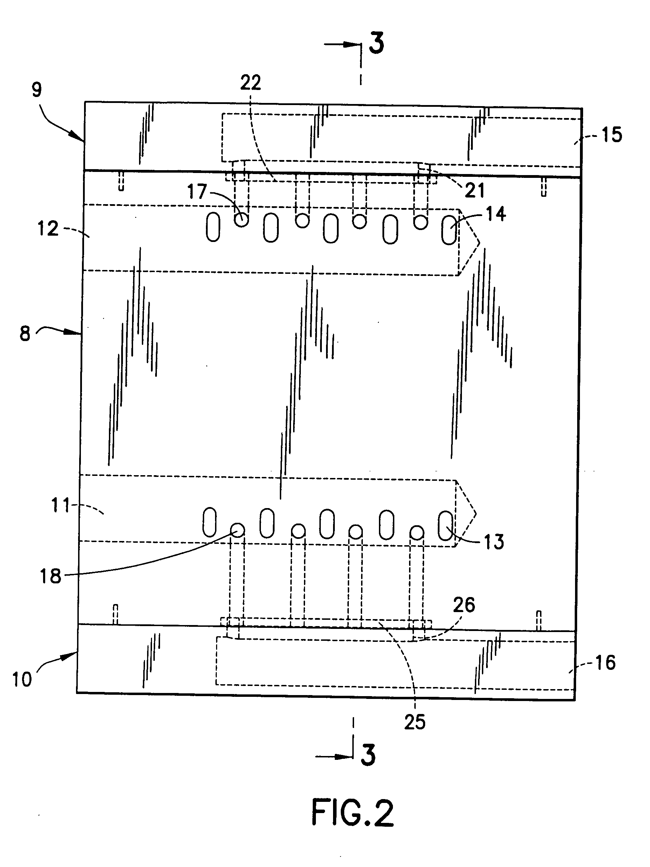

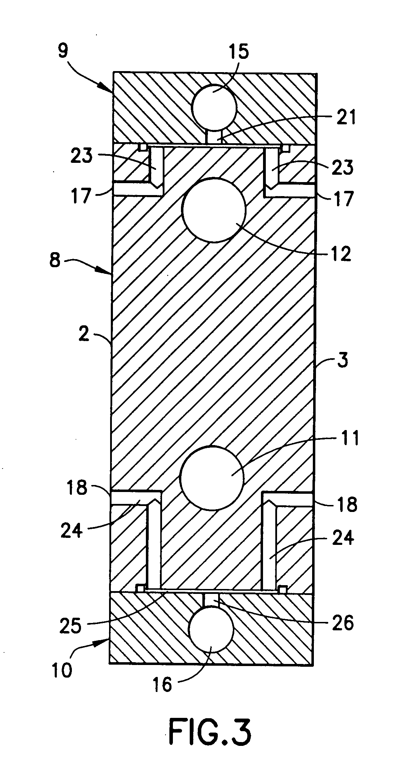

Weiterhin weist das mittlere Plattenelement 8 an seiner vorderen Oberfläche 2 und rückwärtigen Oberfläche 3 obere 17 und untere 18 Filtratöffnungen auf, welche deckungsgleich mit entsprechenden Filtratöffnungen der Filtrationsmodule (nicht dargestellt) angeordnet sind. Wie dies am besten in Fig. 2 und 3 gezeigt ist, sind die oberen Filtratöffnungen 17 in einer kommunizierenden Weise mit einer oberen Filtratsammelkammer 22 über obere Filtratverbindungsleitungen 23 verbunden. Die Filtratsammelkammer 22 ist als eine Vertiefung in der ersten Rand- bzw. Kantenwand 6' des mittleren Plattenelements 8 ausgebildet. In analoger Weise sind die unteren Filtratöffnungen 18 in einer kommunizierenden Weise mit einer unteren Filtratsammelkammer 25 über untere Filtratverbindungsleitungen 24 verbunden. Die Filtratsammelkammer 25 ist als eine Vertiefung in der zweiten Kanten- bzw. Eckwand 7' des mittleren Plattenelements 8 ausgebildet.

Das obere Plattenelement 9 erhält eine Filtratleitung 15, welche parallel zu der Kantenwand 6 und zu der vorderen Oberfläche 2 und rückwärtigen Oberfläche 3 verläuft und zumindest von einer der Seitenwände 5, wie dies in Fig. 1a gezeigt ist, ausgeht. Die Filtratleitung 15 ist in einer kommunizierenden Weise mit der oberen Filtratsammelkammer 22 des mittleren Plattenelements 8 über eine oder mehrere längsverlaufende Filtratleitungsöffnungen 21 verbunden. In analoger Weise erhält das untere Plattenelement 10 eine Filtratleitung 16, welche parallel zu der Kantenwand 7 und zu der vorderen Oberfläche 2 und rückwärtigen Oberfläche 3 verläuft und von wenigstens einer der Seitenwände, hier 5, ausgeht. Die Filtratleitung 16 ist in einer kommunizierenden bzw. wechselwirkenden Weise mit der unteren Filtratsammelkammer 25 der mittleren Platte 8 über eine oder mehrere längsverlaufende Filtratleitungsöffnungen 26 verbunden.

Das obere 9 und untere 10 Plattenelement sind dann mit dem mittleren Plattenelement 8 über Verbindemittel, beispielsweise Schrauben oder jegliche andere bekannten Verbindungsmittel, die den Fachmännern geläufig sind, verbunden. Eine fluiddichte Abdichtung ist in den Umfangskanntenbereich der Filtratsammelkammern 22, 25 mittels einer O-Ringdichtung eingebracht bzw. implementiert.

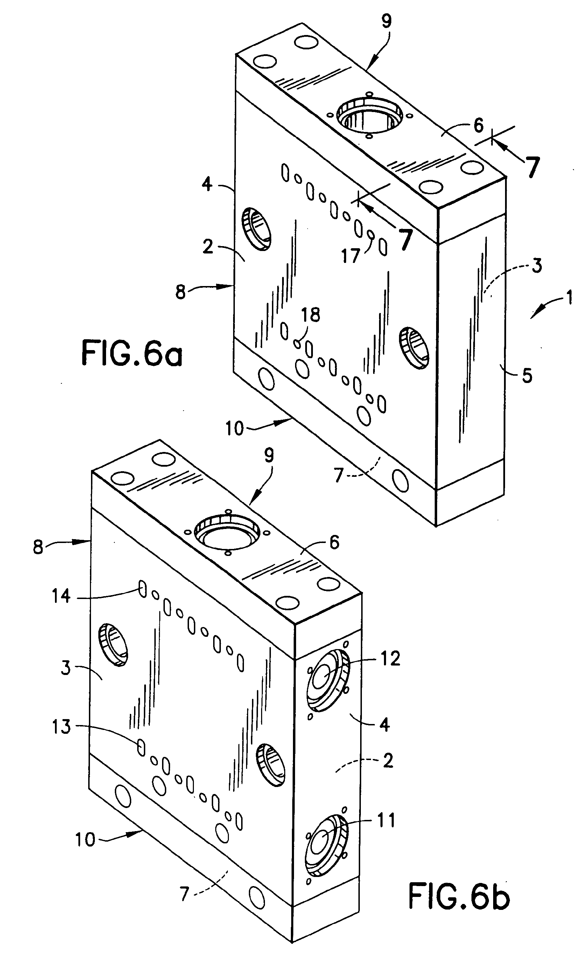

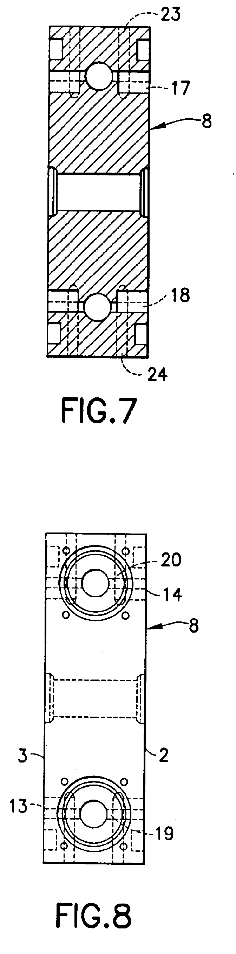

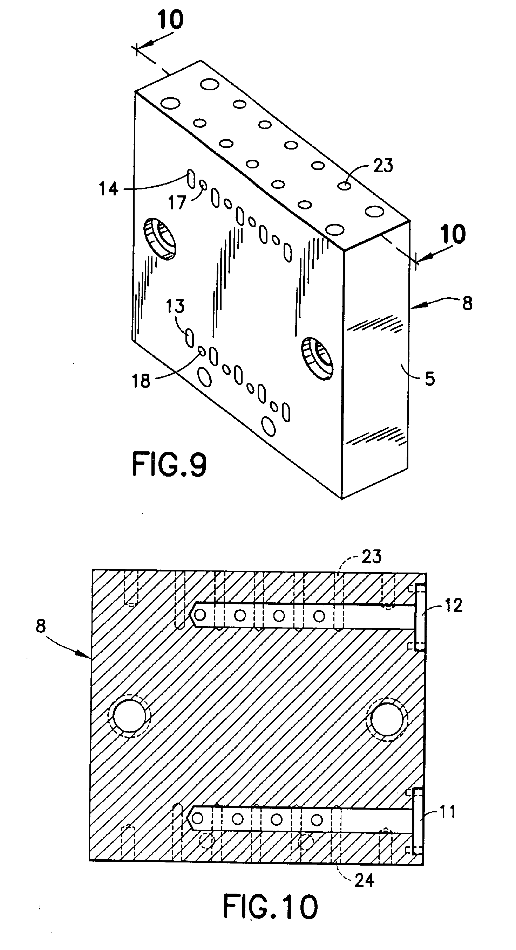

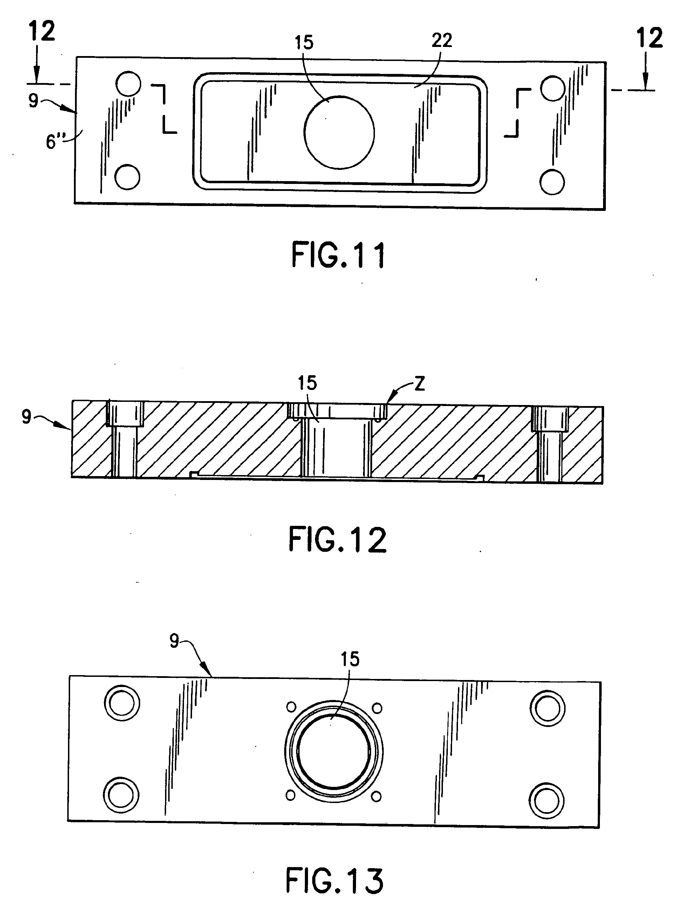

Indem auf die Fig. 6a bis 13 Bezug genommen wird, umfaßt auch die zweite Ausbildung der dreiteiligen Verteilerplattenanordnung 1 ein mittleres Plattenelement 8, ein oberes Plattenelement 9 und ein unteres Plattenelement 10 und weist eine vordere Oberfläche 2 und rückwärtige Oberfläche 3, eine erste 4 und eine zweite 5 Seitenwand und eine erste 6 und eine zweite 7 Kantenwand auf.

Das mittlere Plattenelement 8 erhält bzw. empfängt eine Zufuhrleitung 11 und eine Rückstandsleitung 12, welche parallel zu den Kantenwänden 6, 7 und zu der vorderen Oberfläche 2 und rückwärtigen Oberfläche 3 verlaufen und zumindest von einer der Seitenwände, hier 4, ausgehen. Die Zufuhrleitung 11 ist über Zufuhrverbindungsleitungen 19 an Zufuhröffnungen 13 an der vorderen Oberfläche 2 und rückwärtigen Oberfläche 3 des mittleren Plattenelements 8 angeschlossen bzw. mit diesen verbunden. Die Zufuhröffnungen 13 sind kongruent bzw. deckungsgleich mit entsprechenden Zufuhröffnungen der Filtrationsmodule (nicht dargestellt) angeordnet. Die Rückstandsleitung 12 ist über Rückstandsverbindungsleitungen 20 mit Rückstandsöffnungen 14 an der vorderen Oberfläche 2 und der rückwärtigen Oberfläche 3 des mittleren Plattenelements 8 verbunden. Die Rückstandsöffnungen 14 sind kongruent mit entsprechenden Rückstandsöffnungen der Filtrationsmodule (nicht dargestellt) angeordnet.

Das mittlere Plattenelement 8 der zweiten Ausbildung der Verteilerplattenanordnung bzw. -baueinheit weist an seiner vorderen Oberfläche 2 und rückwärtigen Oberfläche 3 obere 17 und untere 18 Filtratöffnungen auf, welche kongruent mit entsprechenden Filtratöffnungen der Filtrationsmodule (nicht dargestellt) angeordnet sind. Die oberen Filtratöffnungen 18 sind in einer kommunizierenden Weise mit einer oberen Filtratsammelkammer 22 über obere Filtratverbindungsleitungen 23 verbunden. Die Filtratsammelkammer 23 ist als eine Vertiefung in der Kantenwand 6" des oberen Plattenelements 9 ausgebildet, welches zu der Seitenwand 6' des mittleren Plattenelements 8 schaut. Die unteren Filtratöffnungen 18 sind in einer kommunizierenden Weise mit einer unteren Filtratsammelkammer 25 über untere Filtratverbindungsleitungen 24 verbunden. Analog zu dem oberen Plattenelement der zweiten Ausbildung ist die Filtratsammelkammer 25 als eine Vertiefung in der Kantenwand des unteren Plattenelements 10 ausgebildet, welche zu der zweiten Kantenwand 7' des mittleren Plattenelements 8 gerichtet ist.

Das obere Plattenelement 9 erhält bzw. empfängt eine kurze Filtratleitung 15, welche senkrecht zu der Kantenwand 6' und unter rechten Winkeln zu den vorderen Oberfläche 2 und rückwärtigen Oberfläche 3 verläuft und von der Kantenwand 6" des oberen Plattenelements ausgeht. Die Filtratleitung 15 ist in einer kommunizierenden Weise direkt mit der oberen Filtratsammelkammer 22 des oberen Plattenelements 9 verbunden. In analoger Weise erhält das untere Plattenelement 10 eine Filtratleitung 16, welche senkrecht zu der Kantenwand 7 und unter rechten Winkeln zu der vorderen Oberfläche 2 und rückwärtigen Oberfläche 3 verläuft und von der Kantenwand des unteren Plattenelements 10 ausgeht. Die Filtratleitung 16 ist in einer kommunizierenden Weise direkt mit der unteren Filtratsammelkammer 25 des unteren Plattenelements 10 verbunden.

Die oberen 9 und unteren 10 Plattenelemente werden dann mit dem mittleren Plattenelement 8 über Verbindungsmittel, beispielsweise Schrauben oder jegliche andere Verbindungsmittel, die einem Fachmann bekannt sind, verbunden. Eine fluiddichte Abdichtung ist in dem Umfangskantenbereich der Filtratsammelkammern 22, 25 mittels einer O-Ringdichtung eingebracht.

Während einer Querstromfiltration wird die zu filtrierende Flüssigkeit unter Druck in die Zufuhrleitung 11 der Verteilerplattenanordnung 1 eingebracht. Sie fließt bzw. strömt durch die Zufuhrverbindungsleitungen 19 und tritt in die entsprechenden Zufuhröffnungen der Querstromfilterpatronen (nicht dargestellt) über die Zufuhröffnungen 13 an der vorderen 2 und rückwärtigen 3 Seite des mittleren Plattenelements 8 ein, fließt über die Filtermittel (Filtermembranen) der Patronen, tritt in die Verteilerplattenanordnung 1 neuerlich über die Rückstandsöffnungen 14 ein und wird aus dem mittleren Plattenelement 8 über die Rückstandverbindungsleitungen 20 und die Rückstandsleitung 12 hinausgeführt. Das Filtrat, das durch die Filtermittel der Filterpatronen hindurchtritt, wird über die oberen 17 und unteren 18 Filtratöffnungen und die oberen 23 und unteren 24 Filtratverbindungsleitungen in die oberen 22 und unteren 25 Filtratsammelkammern geführt, von wo das Filtrat von der Verteilerplatte über die oberen 15 und unteren 16 Filtratleitungen ausgetragen wird.

Während die Erfindung in bezug auf bevorzugte Ausbildungen beschrieben wurde, ist es offensichtlich, daß zahlreiche Änderungen gemacht werden können, ohne den Rahmen der Erfindung, wie sie in den anhängigen Patentansprüchen definiert ist, zu verlassen.

## Patentansprüche

1. Verteilerplattenanordnung bzw. -baueinheit für Querstrom Kassettentyp-Filtrationseinrichtungen, welche Verteilerplattenanordnung (1) im wesentlichen rechteckig ist, um wenigstens ein Filtrationsmodul aufzunehmen, welche Verteilerplattenanordnung (1) umfaßt:
ein mittleres Plattenelement bzw. -glied (8), das eine vordere (2) und eine rückwärtige (3) Oberfläche bzw. Fläche, eine erste (4) und zweite (5) Seitenwand und eine erste (6) und zweite (7) Randwand bzw. Kantenwand bzw. Eckwand aufweist;
eine sich von der ersten Seitenwand (4) durch das mittlere Plattenelement (8) erstreckende Zufuhrleitung (11) zum Einbringen eines Fluids in die Verteilerplattenanordnung (1);
eine Mehrzahl von Zufuhröffnungen bzw. -löchern (13), die an der vorderen Oberfläche (2) des mittleren Plattenelements (8) angeordnet sind, welche Zufuhröffnungen (13) mit der Zufuhrleitung (11) über eine Mehrzahl von Zufuhrverbindungsleitungen (19) in Fluidwechselwirkung bzw. -verbindung stehen;
eine sich von der ersten Seitenwand (4) durch das mittlere Plattenelement (8) erstreckende Rückstandsleitung (12) zum Austragen eines Rückstandsfluids aus der Verteilerplattenanordnung (1);
eine Mehrzahl von Rückstandsöffnungen bzw. -löchern (14), die an der vorderen Oberfläche (2) des mittleren Plattenelements (8) angeordnet sind, welche Rückstandsöffnungen (14) mit der Rückstandsleitung (12) über eine Mehrzahl bzw. Vielzahl von Rückstandsverbindungsleitungen (20) in Fluidverbindung stehen;
eine Mehrzahl von oberen Filtratöffnungen (17), die an der vorderen Oberfläche (2) des mittleren Plattenelements (8) parallel zu der ersten Eck- bzw. Kantenwand (6) angeordnet sind, welche oberen Filtratöffnungen (17) mit oberen Filtratverbindungsleitungen (23) in Fluidverbindung stehen;
eine Mehrzahl von unteren Filtratöffnungen (18), die an der vorderen Oberfläche (2) des mittleren Plattenelements (8) parallel zu der zweiten Eck- bzw. Kantenwand (7) angeordnet sind, welche unteren Filtratöffnungen (18) mit unteren Filtratverbindungsleitungen (24) in Fluidverbindung stehen;
ein oberes Plattenelement (9), das eine vordere und rückwärtige Oberfläche, eine erste und zweite Seitenwand und eine erste und zweite Kanten- bzw. Eckwand aufweist;
eine obere Filtratleitung (15), die sich von der ersten oder zweiten Seitenwand des oberen Plattenelements (9) erstreckt, die mit einer oberen längsverlaufenden Filtratleitungsöffnung (21) in Fluidverbindung steht;
eine obere Filtratsammelkammer (22), die zwischen der ersten Randwand des mittleren Plattenelements (8) und der zweiten Randwand des oberen Plattenelements (9) angeordnet ist, welche obere Filtratsammelkammer (22) mit den oberen Verbindungsfiltratleitungen (23) und der oberen längsverlaufenden Filtratleitungsöffnung (21) in Fluidverbindung steht, um es einem Filtrat zu erlauben, von dem Filtrationsmodul durch die Verteilerplattenanordnung (1) hindurchzutreten;
ein unteres Plattenelement (10), das eine vordere und rückwärtige Oberfläche, eine erste und zweite Seitenwand und eine erste und zweite Eck- bzw. Kantenwand aufweist;
eine untere Filtratleitung (16), die sich von der ersten oder zweiten Seitenwand des unteren Plattenelements (10) erstreckt, welche mit einer unteren längsverlaufenden Filtratleitungsöffnung (26) in Fluidverbindung steht; und
eine untere Filtratsammelkammer (25), die zwischen der zweiten Randwand des mittleren Plattenelements (8) und der zweiten Randwand des unteren Plattenelements (10) angeordnet ist, welche untere Filtratsammelkammer (25) mit den unteren Verbindungsfiltratleitungen (24) und der unteren längsverlaufenden Filtratleitungsöffnung (26) in Fluidverbindung steht, um es einem Filtrat zu erlauben, von dem Filtrationsmodul durch die Verteilerplattenanordnung (1) hindurchzutreten.

2. Verteilerplattenanordnung nach Anspruch 1, worin die obere Filtratleitung (15) parallel zu der vorderen und rückwärtigen Oberfläche des oberen Plattenelements (1) angeordnet ist.

3. Verteilerplattenanordnung nach Anspruch 2, worin die untere Filtratleitung (16) parallel zu der vorderen und rückwärtigen Oberfläche des unteren Plattenelements (10) ausgerichtet ist.

4. Verteilerplattenanordnung nach Anspruch 3, worin die obere Filtratsammelkammer (22) eine Vertiefung in der ersten Rand- bzw. Eckwand (6) des mittleren Plattenelements (8) ist.

5. Verteilerplattenanordnung nach Anspruch 4, worin die untere Filtratsammelkammer (25) eine Vertiefung in der zweiten Rand- bzw. Eckwand (7) des mittleren Plattenelements (8) ist.

6. Verteilerplattenanordnung nach Anspruch 5, weiterhin umfassend
eine zweite Mehrzahl von Zufuhröffnungen (13), die an der rückwärtigen Oberfläche (3) des mittleren Plattenelements (8) angeordnet sind, welche zweite der Zufuhröffnungen (13) mit der Zufuhrleitung (11) über eine zweite Mehrzahl von Zufuhrverbindungsleitungen (19) in Fluidverbindung steht;
eine zweite Mehrzahl von Rückstandsöffnungen (14), die an der rückwärtigen Oberfläche (3) des mittleren Plattenelements (8) angeordnet sind, welche zweite Mehrzahl von Rückstandöffnungen (14) mit der Rückstandsleitung (12) über eine zweite Mehrzahl von Rückstandsverbindungsleitungen (20) in Fluidverbindungen steht;
eine zweite Mehrzahl von oberen Filtratöffnungen (17), die an der rückwärtigen Oberfläche (3) des mittleren Plattenelements (8) parallel zu der ersten Randwand (6) angeordnet sind, welche zweite Mehrzahl von oberen Filtratöffnungen (17) mit oberen Filtratverbindungsleitungen (23) in Fluidverbindung steht; und
eine zweite Mehrzahl von unteren Filtratöffnungen (18), die an der rückwärtigen Oberfläche (3) des mittleren Plattenelements (8) parallel zu der zweiten Randwand (7) angeordnet sind, welche unteren Filtratöffnungen (18) mit unteren Filtratverbindungsleitungen (24) in Fluidverbindung stehen, wodurch die Verteilerplattenanordnung (1) die Filtrationsmodule an der vorderen und rückwärtigen Oberfläche aufnehmen kann, um eine Filterkapazität zu erhöhen.

7. Verteilerplattenanordnung nach Anspruch 1, worin die obere Filtratleitung (15) senkrecht bzw. normal zu der vorderen und rückwärtigen Oberfläche des oberen Plattenelements (9) ausgerichtet ist.

8. Verteilerplattenanordnung nach Anspruch 7, worin die untere Filtratleitung (16) senkrecht zu der vorderen und rückwärtigen Oberfläche des unteren Plattenelements (10) ausgerichtet ist.

9. Verteilerplattenanordnung nach Anspruch 8, worin die obere Filtratsammelkammer (22) eine Vertiefung in der zweiten Rand- bzw. Eckwand des oberen Plattenelements (9) ist.

10. Verteilerplattenanordnung nach Anspruch 9, worin die untere Filtratsammelkammer (25) eine Vertiefung in der zweiten Rand- bzw. Eckwand des unteren Plattenelements (10) ist.

11. Verteilerplattenanordnung nach Anspruch 10, weiterhin umfassend
eine zweite Mehrzahl von Zufuhröffnungen (13), die an der rückwärtigen Oberfläche (3) des mittleren Plattenelements (8) angeordnet sind, welche zweite der Zufuhröffnungen (13) mit der Zufuhrleitung (11) über eine zweite Mehrzahl von Zufuhrverbindungsleitungen (19) in Fluidverbindung stehen;
eine zweite Mehrzahl von Rückstandsöffnungen (14), die an der rückwärtigen Oberfläche (3) des mittleren Plattenelements (8) angeordnet sind, welche zweite Mehrzahl von Rückstandsöffnungen (14) mit der Rückstandleitung (12) über eine zweite Mehrzahl von Rückstandsverbindungsleitungen (20) in Fluidverbindung steht;
eine zweite Mehrzahl von oberen Filtratöffnungen bzw. -löchern (17), die an der rückwärtigen Oberfläche (3) des mittleren Plattenelements (8) parallel zu der ersten Randwand (6) angeordnet sind, welche zweite Mehrzahl von oberen Filtratöffnungen (17) mit oberen Filtratverbindungsleitungen (23) in Fluidverbindung steht; und
eine zweite Mehrzahl von unteren Filtratöffnungen bzw. -löchern (18), die an der rückwärtigen Oberfläche (3) des mittleren Plattenelements (8) parallel zu der zweiten Randwand (7) angeordnet sind, welche unteren Filtratöffnungen (18) mit unteren Filtratverbindungsleitungen (24) in Fluidverbindung stehen, wodurch die Verteilerplattenanordnung (1) die Filtrationsmodule an der vorderen und rückwärtigen Oberfläche aufnehmen kann, um eine Filterkapazität zu erhöhen.
